# EUROPÄISCHE PATENTSCHRIFT

(11) **EP 0 388 625 B1**
(45) Veröffentlichungstag und Bekanntmachung des Hinweises auf die Patenterteilung: **04.08.1993**
(21) Anmeldenummer: 90102627.8
(22) Anmeldetag: 10.02.1990
(51) Int. Cl.: A22C 11/08, F04C 15/00

(54) **Einrichtung zum Fördern von pastenartigen Massen**
Conveying device for pasty products
Dispositif de transport pour produits pâteux

(30) Priorität: 21.03.1989 DE 3909137
(43) Veröffentlichungstag der Anmeldung: 26.09.1990
(73) Patentinhaber: NAHRUNGSGÜTER MASCHINENBAU GmbH, O-2000 Neubrandenburg (DE)
(72) Erfinder: Räther, Siegfried, D-2360 Bad Segeberg (DE)

(56) Entgegenhaltungen:
- DE-B- 1 031 134
- DE-U- 8 805 548
- FR-A- 2 037 771
- FR-A- 2 570 131
- GB-A- 780 859

## Beschreibung

Die Erfindung betrifft eine Einrichtung zum Fördern von pastenartigen Massen, insbesondere Wurstbrät zwecks Erzeugung eines pulsationsfreien und dichtehomogenen Förderstromes, umfassend ein Förderwerk mit einer durch ein Bodenteil und ein Deckelteil begrenzten Pumpenkammer in einem Gehäuse mit einer Einlaßöffnung und einer Auslaßöffnung, einen in der Pumpenkammer umlaufend angetriebenen Rotor mit radial verschiebbar geführten plattenförmigen Schiebern, welche mit ihren radialen Begrenzungskanten wenigstens über einen Teil ihres Umlaufes mit der radialen Innenwand der Pumpenkammer in Kontakt gehalten und mit ihren axialen Begrenzungskanten zwischen dem Bodenteil und dem Deckelteil gleitdichtend anliegend ausgeführt sind und dadurch Förderzellen zwischen sich einschließen.

Eine derartige Einrichtung ist in vielfältigen Konstruktionsvarianten bekannt. So ist aus dem DE-GM 88 05 548.5 eine Flügelzellenpumpe zum Fördern pastenartiger Massen zu entnehmen, die die im Erfindungsbetreff aufgeführten Merkmale aufweist. Die den Förderdruck erzeugenden Förderzellen zwischen den plattenförmigen Schiebern haben bei dieser Ausführung im wesentlichen die Gestalt von Kreisringsegmenten, was sich daraus ergibt, daß der Rotor im wesentlichen zentrisch gelagert in einem zylindrischen Gehäuse umläuft. Die Trennung von Einlaßöffnung und Auslaßöffnung wird durch ein Keilsegment bewirkt, das unmittelbar hinter der Auslaßöffnung den Ringraum zwischen Gehäuse und Rotor unter Abdichtung gegenüber diesen Elementen füllend eingesetzt ist. Die entsprechende Steuerung der Schieber erfolgt mittels einer stationären Zentralkurve, die sowohl eine stützende, als auch eine rückziehende Steuerung der Schieber ermöglicht.

Wurstbrät hat in der Regel die Eigenschaft, kompressibel zu sein. Dabei variiert der Grad der Kompressibilität je nach Brätsorte und kann Werte bis in den Bereich von 10 % annehmen. Diese Eigenschaft führt dazu, daß die in die Förderzellen eingeströmte Masse inhomogen ist, obwohl die Füllung üblicherweise durch Einsatz von Vakuum unterstützt wird. Das aber hat negative Auswirkungen auf die Dosiergenauigkeit.

Es ist daher üblich, in dem den Förderdruck aufbauenden Bereich eine Vorkompression vorzusehen, um die Kompressibilität des Wurstbrätes aufzuheben. Dies wird bei der Ausführung der Einrichtung nach dem Stand der-Technik durch eine geringfügige Exzentrizität des Rotors in dem Gehäuse erreicht, die ihr Maximum in dem den Förderdruck aufbauenden Bereich der Flügelzellenpumpe hat. Dabei ist die Exzentrizität so bestimmt, daß das Maximum der Verengung der Förderzellen der größten in der Praxis auftretenden Kompressibilität der zu fördernden Brätsorten entspricht.

Werden nun Brätsorten geringerer Kompressibilität gehandhabt, so ergeben sich daraus weit über dem Fülldruck liegende Druckspitzen, die eine erhebliche Belastung des gesamten Systems mit sich bringen können, und die insbesondere das Verschleißverhalten desselben negativ beeinflussen.

Es ist daher die Aufgabe der Erfindung, eine Ausstattung für ein Förderwerk der eingangs beschriebenen Art vorzuschlagen, mit deren Hilfe eine Begrenzung des Vorkompressionsdruckes ermöglichbar ist.

Diese Aufgabe wird erfindungsgemäß durch ein Förderwerk gelöst, bei dem der Bodenteil und/oder der Deckelteil mindestens in dem die Förderzone zwischen Einlaßöffnung und Auslaßöffnung überdeckenden Bereich gegen eine definierte Kraft ausweichbar abgestützt sind. Dabei können der Bodenteil und/oder der Deckelteil vorteilhafterweise einen in die Pumpenkammer hineinragenden Dichtrezeß aufweisen.

Damit ist die Möglichkeit geschaffen, daß sich die Förderzellen in dem kritischen Bereich axial ausdehnen können, wobei sich allerdings ein erhöhter Leckfluß ergibt, der dem Druckgefälle in dem Förderwerk folgt. Dieser Effekt kann jedoch ohne weiteres in Kauf genommen werden, da dies lediglich zu einer gewissen Intensivierung des ohnehin nicht unterbindbaren Leckflusses in das Steuerzentrum des Rotors bewirkt, welches eine Verbindung zu dem auf der Gegenseite wirksamen Vakuum herstellt. Auf diese Weise gelangt das aus dem Leckfuß stammende Brät überwiegend in die Leerkammern vor der Einlaßöffnung und wird dadurch erneut für die Förderung erfaßt. Der sich ebenfalls intensivierende Spaltfluß über die axialen Begrenzungskanten der Schieber bewirkt lediglich, daß einander benachbarte Förderzellen stärker kommunizieren und damit ein gewisser Druckausgleich innerhalb derselben erfolgt. Die Dichtigkeit nach außen bleibt dank des Dichtrezesses erhalten.

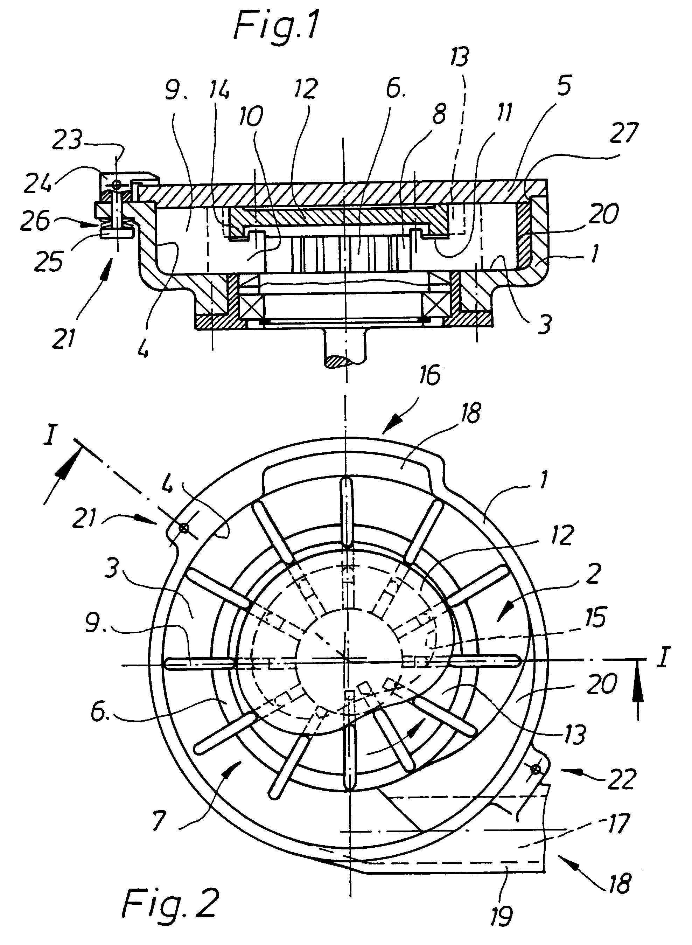

Die Erfindung wird nachfolgend anhand eines in der Zeichnung dargestellten Ausführungsbeispiels näher erläutert. Es zeigt
- Fig. 1: einen Querschnitt durch das Förderwerk in vereinfachter Darstellung längs der Schnittlinie I- I;
- Fig. 2: eine Draufsicht auf das deckelseitig geöffnete Förderwerk nach Fig. 1.

Die Flügelzellenpumpe ist beispielsweise Bestandteil einer nicht dargestellten Fülleinrichtung zum Herstellen von Würstchen und wird in geeigneter Weise durch einen ebenfalls nicht gezeigten, vorzugsweise steuerbaren Antrieb, beispielsweise durch einen Schrittmotor angetrieben. Die Flügelzellenpumpe besteht aus einem Pumpengehäuse 1 , welches eine Pumpenkammer 2 von topfförmiger Gestalt mit einem Bodenteil 3 und einem Zylinderteil 4 umschließt und durch ein Deckelteil 5 verschließbar ist, so daß ein Hohlraum von der Gestalt einer Zylinderscheibe entsteht. In dem Bodenteil 3 des Pumpenhäuses 1 ist ein Pumpenrotor 6 gelagert, der mit einem im wesentlichen zylindrischen Nabenteil 7 die Pumpenkammer 2 zwischen Deckel- 5 und Bodenteil 3 unter engem Gleitsitz ausfüllt. Das Nabenteil 7 ist mit in Achsrichtung verlaufenden Radialschlitzen 8 versehen, in welchen plattenförmige Schieber 9 unter leichtem Schiebesitz verschiebbar geführt sind. Die Schieber 9 sind im Bereich eines abgesetzten Teiles 10 mit einer quer verlaufenden Nut 11 versehen, in die eine Steuerkurve 12 eingreift. Diese ist in einer dem Deckelteil 5 des Pumpengehäuses 1 zuweisenden Eindrehung 13 in dem Pumpenrotor 6 angeordnet und wird mittels geeigneter Fixiermittel verdrehsicher durch den Deckelteil 5 des Pumpengehäuses 1 fixiert. Die Steuerkurve 12 ist als Kurvenscheibe gestaltet und von einem die Peripherie bildenden Kurvensteg 14 begrenzt, der gleichzeitig eine Innenkurve 15 bildet. Der steuernde Angriff an den Schiebern 9 erfolgt, wie oben erwähnt, durch Eingriff des Kurvensteges 14 in deren jeweilige Nut 11 . Das Pumpengehäuse 1 weist eine Einlaßöffnung 16 und eine Auslaßöffnung 17 auf, die sich etwa diametral gegenüberstehen. Die Einlaßöffnung 16 ist dabei als Tasche 18 in dem Zylinderteil 4 des Pumpengehäuses 1 ausgebildet und steht mit einem nicht gezeigten Vorratstrichter in Verbindung. Die Auslaßöffnung 17 befindet sich in einem etwa tangential an dem Pumpengehäuse 1 angebrachten Stutzen 19 und durchdringt ein in dem Pumpengehäuse 1 angeordnetes Keilsegment 20 , welches sich in dem Zylinderteil 4 im Bereich der Auslaßöffnung 17 und in Drehrichtung des Pumpenrotors 6 vor dieser einschmiegt.

Der Pumpenrotor 6 ist in dem Pumpengehäuse 1 exzentrisch gelagert, wobei das Maximum der Exzentrizität in dem den Förderdruck aufbauenden Bereich des Förderwerkes liegt, so daß dort der zwischen dem Pumpenrotor 6 und dem Pumpengehäuse 1 verbleibende Ringraum in diesem Bereich um das Exzentermaß eingeengt ist.

Für die Verbindung des Deckelteils 5 mit dem Pumpengehäuse 1 sorgen zwei etwa in der Exzenterebene einander gegenüberliegende Befestigungselemente 21 und 22, die aus Gründen der leichten Zugänglichkeit des Pumpeninneren zu Reinigungszwecken als Vorreiber ausgebildet sind. Diese sind jeweils um eine in dem Pumpengehäuse 1 gelagerte Achsen 23 schwenkbar ausgeführt, wobei diese an ihrem nach außen weisenden Enden mit einem über den Deckelteil 5 schwenkbaren Riegelteil 24 und an dem anderen Ende mit einem das Pumpengehäuse 1 untergreifenden Bund 25 versehen sind. Mindestens bei dem den Deckelteil 5 im Bereich der Kompressionszone niederhaltenden Befestigungselement 21 befindet sich zwischen dem Bund 25 und dem Pumpengehäuse 1 ein Satz vorgespannter Tellerfedern 26.

Der funktionelle Zusammenhang ist folgender:
Die in dem nicht gezeigten Vorratstrichter bevorratete Masse, z. B. Wurstbrät, wird durch eine geeignete, in dem Vorratstrichter installierte Stopfeinrichtung in Richtung auf seine Ausgangsöffnung gedrängt. Unterstützt wird dieser Vorgang in bekannter Weise durch Einwirken von Vakuum, welchem die Pumpenkammer 2 unterworfen wird. Diese beiden Maßnahmen bewirken, daß das Wurstbrät in die Tasche 18 des Pumpengehäuses 1 einfließt und die Förderzellen zwischen den-Schiebern 9 gefüllt werden. Die so gefüllten Förderzellen verlagern sich nun aufgrund des Umlaufs des Pumpenrotors 6 in Richtung der Auslaßöffnung 17 und gelangen so in die sich infolge der exzentrischen Anordnung des Pumpenrotors 6 in dem Pumpengehäuse 1 bildende Vorkompressionszone in der das Volumen der Förderzellen entsprechend dem Exzentermaß verringert wird. Übersteigt bei diesem Prozeß die durch das Exzentermaß vorgegebene Vorkompression die Kompressibilität des zu verarbeitenden Brätes, so gibt der Deckelteil 5 gegen die Tellerfedern 26 nach, so daß die über die Kompressibilität hinausgehende Volumenverringerung der Förderzellen keine weitere Drucksteigerung bewirkt. Die Dichtigkeit des Deckelteils 5 gegenüber dem Pumpengehäuse 1 bleibt während dieses Prozesses aufgrund des Dichtrezesses 27 an dem Deckelteil 5 erhalten, welcher in eine entsprechende Ausnehmung in dem Pumpen gehäuse 1 greift.

Im weiteren Verlauf der Drehung des Pumpenrotors 6 werden die Schieber 9 nach und nach aus der Pumpenkammer 2 zurückgezogen, so daß sich die Förderzellen zwischen den Schiebern 9 zu der Auslaßöffnung 17 hin zunehmend vereinen. Kurz vor Erreichen des Keilsegmentes 20 sind die Schieber 9 schließlich soweit zurückgezogen, daß ihre vorher an der Innenwand des Zylinderteils 4 der Pumpenkammer 2 anliegenden, äußeren radialen Begrenzungskanten mit der Umfangsfläche des Pumpenrotors 6 bündig stehen und unter das Keilsegment 20 tauchen können.

Damit wird das Brät insbesondere durch den vor der Auslaßöffnung 17 letzten, gegenüber der Innenwand des Zylinderteils 4 dichtenden Schieber 9 der Auslaßöffnung 17 zugeschoben, wobei die durch den Rückzug der Schieber 9 entstehenden definierten Hohlräume aufgrund des dynamischen Gegendrucks in dem Abflußkanal aufgefüllt werden. Es ergibt sich ein pulsationsfreier Füllstrom, praktisch idealer Homogenität.

## Patentansprüche

1. Einrichtung zum Fördern von pastenartigen Massen, insbesondere Wurstbrät zwecks Erzeugung eines pulsationsfreien und dichtehomogenen Förderstromes, umfassend ein Förderwerk mit einer durch ein Bodenteil (3) und ein Deckelteil (5) begrenzten Pumpenkammer (2) in einem Gehäuse (1) mit einer Einlaßöffnung (16) und einer Auslaßöffnung (17) , einen in der Pumpenkammer (2) umlaufend angetriebenen Rotor (6) mit radial verschiebbar geführten plattenförmigen Schiebern (9) , welche mit ihren radialen Begrenzungskanten wenigstens über einen Teil ihres Umlaufes mit der radialen Innenwand der Pumpenkammer (2) in Kontakt gehalten und mit ihren axialen Begrenzungskanten zwischen dem Bodenteil (3) und dem Deckelteil (5) gleitdichtend anliegend ausgeführt sind und dadurch Förderzellen zwischen sich einschließen, **dadurch gekennzeichnet ,** daß der Bodenteil (3) und/oder der Deckelteil (5) mindestens in dem die Förderzone zwischen Einlaß-Öffnung (16) und Auslaßöffnung (17) überdeckenden Bereich gegen eine definierte Kraft ausweichbar abgestützt sind.

2. Einrichtung nach Anspruch 1, **dadurch gekennzeichnet,** daß der Bodenteil (3) und/oder der Deckelteil (5) einen in die Pumpenkammer (2) hineinragenden Dichtrezeß (27) aufweisen.

## Claims

1. Equipment for the conveying of pasty masses, especially sausage meat, for the purpose of producing a pulsation-free and closely homogeneous flow stream, comprising a conveying mechanism with a pump chamber (2), which is bounded by a base member (3) and a cover member (5), in a housing (1) with an inlet opening (16) and an outlet opening (17), and a rotationally driven rotor (6), which has plate-shaped slides (9) guided to be radially displaceable, in the pump chamber (2), which slides are held in contact with the radially inner wall of the pump chamber (2) by their radial boundary edges over at least a part of their circulation and are constructed to slidingly and sealingly bear by their axial boundary edges between the base member (3) and the cover member (5) and thereby include conveying cells between them, characterised thereby that the base member (3) and/or the cover member (5) are supported to be deflectable against a defined force at least in the region covering the conveying zone between inlet opening (16) and outlet opening (17).

2. Equipment according to claim 1, characterised thereby that the base member (3) and/or the cover member (5) comprise a sealing recess (27) projecting into the pump chamber (2).

## Revendications

1. Installation pour transporter des masses pâteuses, notamment de chair à saucisse, pour former un flux transporté, homogène, dense, ne présentant pas de pulsation, cette installation comprenant un mécanisme de transfert avec une chambre de pompe (2) délimitée par une partie de fond (3) et une partie de couvercle (5), dans un boîtier avec un orifice d'entrée (16) et un orifice de sortie (17), un rotor (6) entraîné, tournant dans la chambre de pompe (2), ce rotor ayant des palettes (9) guidées en coulissement dans la direction radiale, les arêtes radiales des palettes étant maintenues en contact avec la paroi intérieure radiale de la chambre de pompe (2), au moins sur une fraction de leur trajectoire, et les arêtes axiales des palettes sont réalisées de façon à s'appliquer de manière étanche en glissement entre la partie de fond (3) et la partie de couvercle (5), pour délimiter entre elles des alvéoles de transfert, installation caractérisée en ce que la partie de fond (3) et/ou la partie de couvercle (5) sont appuyées de manière à pouvoir céder sous l'effet d'une force définie au moins dans la zone qui recouvre la zone de transfert comprise entre l'orifice d'entrée (16) et l'orifice de sortie (17).

2. Installation selon la revendication 1, caractérisée en ce que la partie de fond (3) et/ou la partie de couvercle (5) ont une cavité d'étanchéité (27) pénétrant dans la chambre de pompe (2).
